# EUROPÄISCHE PATENTSCHRIFT

(11) **EP 0 560 026 B1**
(45) Veröffentlichungstag und Bekanntmachung des Hinweises auf die Patenterteilung: **27.09.1995**
(21) Anmeldenummer: 93100975.7
(22) Anmeldetag: 22.01.1993
(51) Int. Cl.: H02M 5/22, G05F 1/12

(54) **Einrichtung zum Betreiben von Lasten an Wechselspannungsquellen**
Device for the operation of loads on AC supply terminals
Dispositif pour l'opération des charges aux sources de tension alternative

(30) Priorität: 21.02.1992 DE 4205252
(43) Veröffentlichungstag der Anmeldung: 15.09.1993
(73) Patentinhaber: Hella KG Hueck & Co., 59552 Lippstadt (DE)
(72) Erfinder: Schulte, Peter, 5760 Arnsberg 2 (DE); Schmees, Siegfried, 4787 Geseke (DE); Müller, Bernhard, 5760 Arnsberg 2 (DE)

(56) Entgegenhaltungen:
- EP-A- 0 335 626
- EP-A- 0 452 715
- DE-A- 3 913 932
- US-A- 4 011 499

## Beschreibung

Die Erfindung betrifft eine Einrichtung zum Betreiben von Lasten an Wechselspannungsquellen.

Es ist bekannt, Lasten wie Glühlampen oder Halogenglühlampen an Wechselspannungsquellen zu betreiben. Hierzu wird üblicherweise zwischen der Wechselspannungsquelle und der Last ein Transformator zur Spannungsreduzierung angeordnet. Zudem ist bekannt, die Last über eine Schalteinrichtung im Primärkreis oder im Sekundärkreis des Transformators zu schalten. Desweiteren ist bekannt, zur Verminderung des Kalteinschaltstromes bei dem Einschalten der Last Heißleiter zu verwenden.

Aus DE-A-3913932 ist eine Einrichtung zum Betreiben von Lasten bekannt. Ein Mikroprozessor liefert Steuersignale für die Ansteuerung eines nullpunktgesteuerten Wechselstromschalters, der über Leistungsthyristoren und einen Transformator eine Last bestromt. Das Thyristorpaar des Wechselstromschalters ist in Serie mit einem Vorwiderstand geschaltet.

Insbesondere bei der Verwendung in Flugzeugen erweisen sich Heißleiter als ungeeignet, da diese nur über einen begrenzten Temperaturbereich zufriedenstellend funktionieren.

Die bekannte Verwendung von Phasenanschnittsteuerungen erweist sich als nachteilig, da diese sehr aufwendig und kostenintensiv sind.

Der Erfindung liegt die Aufgabe zugrunde, eine Einrichtung zum Betreiben von Lasten an Wechselspannungsquellen zu schaffen, die einfach und kostengünstig ist, die den Kalteinschaltstrom der Lasten zuverlässig reduziert und ein kontrolliertes Schalten der Lasten gewährleistet.

Die Aufgabe wird erfindungsgemäß durch die Merkmale des Anspruchs 1 gelöst.

Bei einer Einrichtung zum Betreiben von Lasten an einer Wechselspannungsquelle, einem ersten Transformator, dessen Primärwicklung mit der Wechselspannungsquelle verbunden ist, mit einer Last, die mit der Sekundärwicklung des ersten Transformators verbunden ist, mit einer ersten Schalteinrichtung in der Verbindung zwischen der Primärwicklung des ersten Transformators und der Wechselspannungsquelle erweist es sich als vorteilhaft, daß ein Mikrorechner mit dem Steuereingang der ersten Schalteinrichtung zur Umsteuerung der ersten Schalteinrichtung verbunden ist, weil somit jederzeit ein durch den Mikrorechner kontrolliertes und überwachtes Schalten der Last gewährleistet wird.

Es ist von Vorteil, daß parallel zu der ersten Schalteinrichtung eine Reihenschaltung aus einer zweiten Schalteinrichtung und einem Vorwiderstand angeordnet ist, wobei der Steuereingang der zweiten Schalteinrichtung zur Umsteuerung der zweiten Schalteinrichtung mit dem Mikrorechner verbunden ist, wodurch auf einfache und kostengünstige Weise der Kalteinschaltstrom der Last durch Inreiheschalten des Vorwiderstands zuverlässig reduziert wird und durch die Umsteuerung der ersten Schalteinrichtung und der zweiten Schalteinrichtung durch den Mikrorechner ein kontrolliertes Schalten der Last gewährleistet wird.

In diesem Zusammenhang erweist sich als besonders vorteilhaft, daß der Mikrorechner eine Ansteuerschaltung für die erste und zweite Schalteinrichtung aufweist, die bei einem vorliegenden Einschaltsignal für die Last zuerst die zweite Schalteinrichtung in den geschlossenen Zustand schaltet, mit einer ersten Verzögerungszeit die erste Schalteinrichtung in den geschlossenen Zustand schaltet und die zweite Schalteinrichtung in den geöffneten Zustand schaltet, wodurch auf einfache und kostengünstige Weise sichergestellt wird, daß der Kalteinschaltstrom der Last wirkungsvoll durch kontrolliertes Schalten der Last vermindert wird.

Dadurch, daß die zweite Schalteinrichtung von der Ansteuerschaltung des Mikrorechners nach einer zweiten Verzögerungszeit in den geöffneten Zustand geschaltet wird, wird auf einfache und kostengünstige Weise sichergestellt, daß nicht beide Schalteinrichtungen gleichzeitig geöffnet sind, wodurch ein kontrolliertes Schalten der Last gewährleistet wird, bei dem Oberwellen in der Wechselspannung durch das Schalten, die durch die Induktion des ersten Transformators noch verstärkt werden können, sicher und zuverlässig vermieden werden.

Dadurch, daß eine galvanische Trennung zwischen dem Mikrorechner und der ersten und zweiten Schalteinrichtung besteht, wird auf einfache und kostengünstige Weise gewährleistet, daß die zu schaltende Wechselspannung keine negativen Einwirkungen auf den Mikrorechner haben kann. Die erste und zweite Schalteinrichtung kann dabei jeweils als ein Optokoppler mit Schalteinrichtung und insbesondere als ein Optotriac ausgebildet sein, der ausschließlich im Nulldurchgang der Wechselspannung schaltet.

Es ist von Vorteil, daß die Parallelschaltung aus der ersten Schalteinrichtung und der zweiten Schalteinrichtung mit dem Vorwiderstand über eine Klemme mit einer Stromüberwachungseinrichtung verbunden ist, weil somit auf einfache und kostengünstige Weise der von der Last aufgenommene Strom überwacht werden kann und ein kontrolliertes Schalten der Last ermöglicht werden kann.

Dadurch, daß die Stromüberwachungseinrichtung einen zweiten Transformator aufweist, dessen Primärwicklung zum einen mit der Klemme und zum anderen mit der Wechselspannungsquelle verbunden ist und daß die Sekundärwicklung des zweiten Transformators zum einen mit Masse und zum anderen mit einem Überwachungseingang des Mikrorechners verbunden ist, ergibt sich der Vorteil, daß die Überwachung des Stroms, der von der Last aufgenommen wird, galvanisch getrennt von dem Überwachungseingang des Mikrorechners durchgeführt werden kann, wodurch auf einfache und kostengünstige Weise sichergestellt wird, daß der Mikrorechner durch die Wechselspannung nicht in seiner Funktion geschädigt oder beschädigt werden kann.

Dadurch, daß der Überwachungseingang des Mikrorechners über einen Tießfaßfilter mit dem Arbeitswiderstand der parallel zu der Sekundärwicklung des zweiten Transformators angeordnet ist verbunden ist, ergibt sich der Vorteil, daß hochfrequente Störungen aus dem Signal, das an dem Überwachungseingang des Mikrorechners anliegt, einfach und zuverlässig herausgefiltert werden und somit die Wirkungsweise des Mikrorechners nicht stören.

Es ist von Vorteil, daß der überwachungseingang des Mikrorechners mit der Kathode einer ersten Diode, deren Anode mit Masse verbunden ist, und mit der Anode einer zweiten Diode verbunden ist, deren Kathode mit einem Spannungsregler verbunden ist, weil somit sichergestellt wird, daß dem Mikrorechner keine Spannungen über den zweiten Transformator zugeführt werden, die den Mikrorechner schädigen könnten.

Durch die Verwendung der Einrichtung zum Betreiben von Lasten an Wechselspannungsbordnetzen von Flugzeugen, ergibt sich der Vorteil, daß z. B. Glühlampen oder Halogenglühlampen, im Passagierbereich oder im Cockpit des Flugzeugs jederzeit kontrolliert geschaltet werden können und beim Einschalten der Kalteinschaltstrom wirkungsvoll vermindert wird.

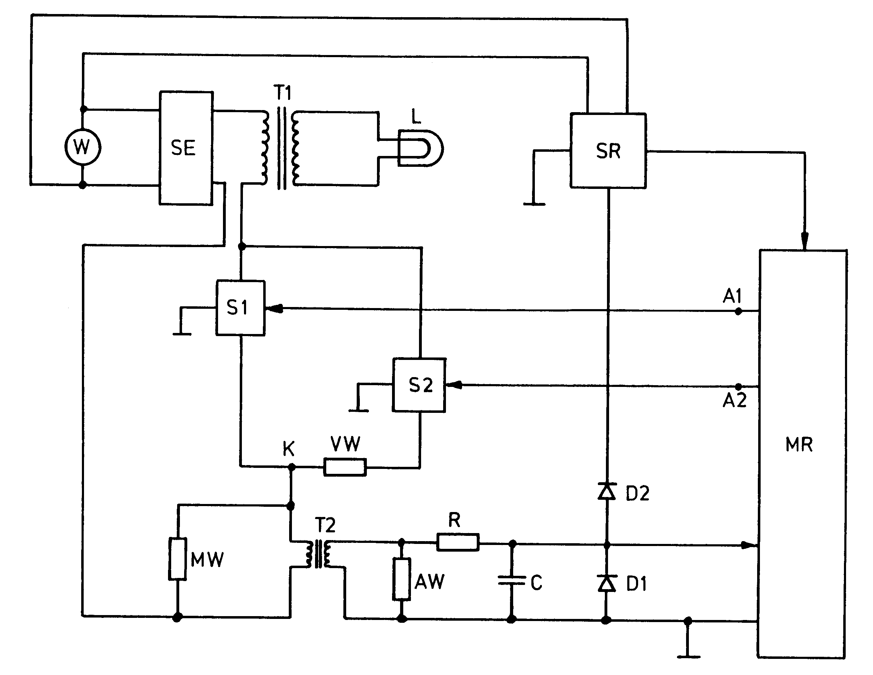

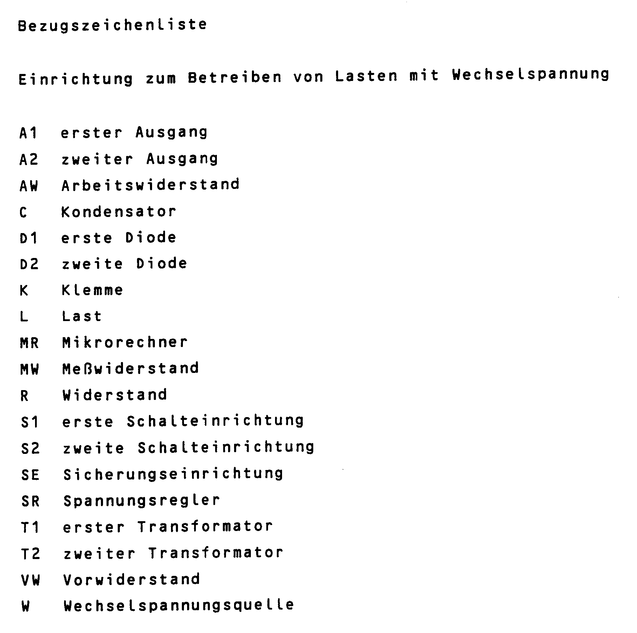

Ein Ausführungsbeispiel des Erfindungsgegenstands ist in der einzigen Zeichnung dargestellt und wird im folgenden anhand der Zeichnung näher beschrieben.

Die einzige Figur zeigt eine erfindungsgemäße Einrichtung bei der eine Wechselspannungsquelle (W) mit der Primärwicklung eines ersten Transformators (T1) verbunden ist. Die Wechselspannungsquelle (W) kann dabei ein Wechselspannungsgenerator eines Flugzeugs sein, der das Wechselspannungsbordnetz speist. Die Wechselspannung weist dabei einen Spannungswert von 115 Volt bei einer Frequenz von 400 Hertz auf. In der Verbindung zwischen der Wechselspannungsquelle (W) und der Primärwicklung des ersten Transformators (T1) kann dabei, wie in dem Ausführungsbeispiel gezeigt, eine Sicherungseinrichtung (SE) angeordnet sein, die zum Schutz dient. In der Sicherungseinrichtung (SE) können eine Sicherung wie eine Schmelzsicherung oder eine Fadensicherung, Schutzdioden und/oder Kondensatoren angeordnet sein.

Die Sekundärwicklung des ersten Transformators (T1) ist mit einer Last (L) verbunden. Die Last (L) ist bei dem hier gewählten Ausführungsbeispiel eine Halogenglühlampe, die z. B. in einer Leseleuchte im Passagierbereich oder im Cockpit-Bereich des Flugzeugs angeordnet sein kann. Bei anderen Ausführungsbeispielen können auch andere Lasten (L) Verwendung finden. Auch können mehrere Lasten (L) mit der oder den Sekundärwicklungen des ersten Transformators (T1) verbunden sein.

Die Primärwicklung des ersten Transformators (T1), die zum einen mit der Wechselspannungsquelle (W) über die Sicherungseinrichtung (SE) verbunden ist, ist zum anderen über eine erste Schalteinrichtung (S1) mit einer Klemme (K) verbunden.

Parallel zu der ersten Schalteinrichtung (S1) ist eine Reihenschaltung aus einer zweiten Schalteinrichtung (S2) und einem Vorwiderstand (VW) angeordnet. Der Steuereingang der ersten Schalteinrichtung (S1) ist elektrisch leitend mit einem ersten Ausgang (A1) eines Mikrorechners (MR) zur Umsteuerung verbunden. Der Steuereingang der zweiten Schalteinrichtung (S2) ist elektrisch leitend mit einem zweiten Ausgang (A2) des Mikrorechners (MR) zur Umsteuerung verbunden. Bei dem hier gezeigten Ausführungsbeispiel weisen die erste Schalteinrichtung und die zweite Schalteinrichtung (S1, S2) jeweils einen Masseanschluß auf. Um sicherzustellen, daß die zu schaltenden Wechselspannungen keine negativen Einflüsse auf die Wirkungsweise des Mikrorechners (MR) haben, sind die Schalteinrichtungen (S1, S2) galvanisch von den Ausgängen (A1, A2) des Mikrorechners (MR) getrennt. Verwendung finden können bei der galvanischen Trennung z. B. bekannte Opto-Koppler. Zur Vermeidung von Oberwellen in der Wechselspannung beim Schalten werden bei dem hier gezeigten Ausführungsbeispiel Schalteinrichtungen (S1, S2) verwendet, die beim Nulldurchgang der Wechselspannung schalten. Als besonders günstig hat es sich dabei erwiesen, für die erste Schalteinrichtung (S1) und die zweite Schalteinrichtung (S2) Opto-Triacs zu verwenden, die aus Triacs bestehen, die optisch umsteuerbar sind.

Um den Kalteinschaltstrom der Last (L) möglichst wirksam zu vermindern und ein kontrolliertes Schalten der Last (L) zu ermöglichen, weist der Mikrorechner (MR) eine hier nicht gezeigte Ansteuerschaltung auf, die die zeitliche Ansteuerung der ersten und zweiten Schalteinrichtung (S1, S2) steuert und insbesondere die Zeit, über die der Vorwiderstand (VW) wirksam wird. Die Klemme (K) ist über die Primärwicklung eines zweiten Transformators (T2) und über die Sicherungseinrichtung (SE) mit der Wechselspannungsquelle (W) verbunden. Parallel zu der Primärwicklung des zweiten Transformators (T2) ist als Shunt-Widerstand zur Messung des von der Last (L) aufgenommenen Stroms ein Meßwiderstand (MW) angeordnet. Bei einem anderen Ausführungsbeispiel kann auf den Meßwiderstand (MW) verzichtet werden, wenn der zweite Transformator (T2) als Stromwandler dimensioniert wird. Die Sekundärwicklung des zweiten Transformators (T2) ist dabei zum einen mit Masse und zum anderen mit einem Überwachungseingang des Mikrorechners (MR) verbunden. Die primärseitige Strommessung erfolgt somit galvanisch getrennt von dem Mikrorechner (MR). Parallel zu der Sekundärwicklung des zweiten Transformators (T2) ist ein Arbeitswiderstand (AW) angeordnet. Wiederum parallel zu dem Arbeitswiderstand (AW) ist ein Kondensator (c) angeordnet, dessen erste Elektrode mit Masse und dessen zweite Elektrode zum einen mit dem Mikrorechner (MR) und zum anderen über einen Widerstand (R) mit der Sekundärwicklung des zweiten Transformators (T2) verbunden ist. Der Widerstand (R) und der Kondensator (C) bilden einen Tießpaß, der verhindert, daß dem Mikrorechner (MR) störende Hochfrequenzen in den Spannungssignal zugeführt werden. Parallel zu dem Kondensator (C) ist eine erste Diode (D1) angeordnet, deren Anode mit Masse und deren Kathode mit dem Überwachungseingang des Mikrorechners (MR) verbunden ist. Der Überwachungseingang des Mikrorechners (MR) ist zudem mit der Anode einer zweiten Diode (D2) verbunden, deren Kathode mit einem Spannungsregler (SR) verbunden ist. Durch die erste und zweite Diode (D1, D2) wird sichergestellt, daß dem Mikrorechner über den zweiten Transformator (T2) keine Spannungen zugeführt werden, die diesen schädigen könnten. Vorteilhaft werden Spannungen kleiner als die Bezugsmasse und größer als die Betriebsspannung des Mikrorechners (MR) durch die Dioden (D1, D2) dem Mikrorechner (MR) nicht zugeführt. Der Mikrorechner (MR) ist ebenfalls mit Masse verbunden.

Der Spannungsregler (SR) ist vorteilhaft mit galvanischer Trennung mit der Wechselspannungsquelle (W) verbunden und erzeugt eine stabilisierte Gleichspannung, die bei dem hier gezeigten Ausführungsbeispiel zur Gleichspannungsversorgung des Mikrorechners (MR) dienen kann. Der Spannungsregler (SR) weist bei dem hier gezeigten Ausführungsbeispiel auch einen Masseanschluß auf.

Der Mikrorechner (MR) kann mit weiteren Mikrorechnern und Bordcomputern des Flugzeugs in Verbindung stehen. Eine solche Ausführung ist in der Zeichnung nicht gezeigt.

Im folgenden wird die Wirkungsweise der erfindungsgemäßen Einrichtung anhand der Zeichnung kurz beschrieben.

Wird dem Mikrorechner (MR) ein Einschaltsignal für die Last (L) zugeführt, so erzeugt dieser an seinem zweiten Ausgang (A2) ein Signal, daß die zweite Schalteinrichtung (S2) von dem geöffneten Zustand in den geschlossenen Zustand schaltet. Durch den in Reihe mit der zweiten Schalteinrichtung (S2) angeordneten Vorwiderstand (VW) wird der Last (L) ein reduzierter Strom zugeführt, der eine Vorwärmung der Last (L) bewirkt. Nach einer ersten Verzögerungszeit erzeugt die Ansteuereinrichtung des Mikrorechners (MR) an dem ersten Ausgang (A1) ein Signal, daß die erste Schalteinrichtung aus dem geöffneten Zustand in den geschlossenen Zustand schaltet. Nach Ablauf einer zweiten Verzögerungszeit wird von der Ansteuerschaltung des Mikrorechners (MR) am zweiten Ausgang (A2) ein Signal erzeugt, daß die zweite Schalteinrichtung aus dem geschlossenen Zustand in den geöffneten Zustand schaltet, so daß vermieden wird, daß bei vorliegendem Einschaltsignal beide Schalteinrichtungen (S1, S2) gleichzeitig geschlossen sind. Bei dem hier gewählten Ausführungsbeispiel beträgt die erste Verzögerungszeit beispielhaft etwa 20 Millisekunden und beträgt die zweite Verzögerungszeit beispielhaft etwa 5 Millisekunden. Je nach Ausführungsbeispiel und verwendeter Last (L) können und müssen diese Zeiten größer oder kleiner gewählt werden.

Auch der Widerstandswert des Vorwiderstands (VW) der bei dem hier gewählten Ausführungsbeispiel beispielhaft etwa 100 Ohm beträgt, kann oder muß je nach Ausführungsbeispiel und verwendeter Last größer oder kleiner gewählt werden.

Um eine Überwachung des von der Last (L) aufgenommenen Stroms und damit ein kontrolliertes Schalten der Last (L) zu ermöglichen, wird über den als Shunt-Widerstand parallel zu der Primärwicklung des zweiten Transformators (T2) angeordneten Meßwiderstand (MW) der von der Last aufgenommene Strom gemessen und dem Mikrorechner (MR) über den zweiten Transformator (T2) und dessen Sekundärwicklung zugeführt.

Bei dem hier gezeigten Ausführungsbeispiel berechnet der Mikrorechner (MR) aus den positiven Halbwellen des ihm zugeführten Spannungssignals den Effektivwert des von der Last (L) aufgenommenen Stroms um ein kontrolliertes Schalten der Last (L) über die erste Schalteinrichtung (S1) und die zweite Schalteinrichtung (S2) zu ermöglichen. Durch diese galvanisch getrennte Überwachung des Effektivwerts des Stroms im Primärkreis des zweiten Transformators durch den Mikrorechner (MR) wird es ermöglicht, daß dieser erkennt, ob z. B.
1. kein Strom fließt
2. ein normaler Strom fließt
3. ein Kalteinschaltstrom fließt oder
4. ein Kurzschluß vorliegt.

Entsprechend dem gemessenen Effektivwert des Stroms schaltet der Mikrorechner (MR) die erste Schalteinrichtung (S1) und oder die zweite Schalteinrichtung (S2).

## Patentansprüche

1. Einrichtung zum Betreiben von Lasten an Wechselspannungsquellen mit folgenden Merkmalen:
a) einer Wechselspannungsquelle (W)
b) einem ersten Transformator (T1), dessen Primärwicklung mit der Wechselspannungsquelle (W) verbunden ist,
c) einer Last (L), die mit der Sekundärwicklung des ersten Transformators (T1) verbunden ist,
d) einer ersten Schalteinrichtung (S1) in der Verbindung zwischen der Primärwicklung des ersten Transformators (T1) und der Wechselspannungsquelle (W),
e) einem Mikrorechner (MR), der mit dem Steuereingang der ersten Schalteinrichtung (S1) zur Umsteuerung der ersten Schalteinrichtung (S1) verbunden ist,
f) einer Reihenscbaltung aus einer zweiten Schalteinrichtung (S2) und einem Vorwiderstand (VW) parallel zu der ersten Schalteinrichtung (S1), wobei der Steuereingang der zweiten Schalteinrichtung (S2) zur Umsteuerung der zweiten Schalteinrichtung (S2) mit dem Mikrorechner (MR) verbunden ist,
g) einer Ansteuerschaltung in dem Mikrorechner (MR) für die erste und zweite Schalteinrichtung (S1, S2), die bei einem vorliegenden Einschaltsignal für die Last (L) zuerst die zweite Schalteinrichtung (S2) in den geschlossenen Zustand schaltet, mit einer ersten Verzögerungszeit die erste Schalteinrichtung (S1) in den geschlossenen Zustand schaltet und die zweite Schalteinrichtung (S2) in den geöffneten Zustand schaltet.

2. Einrichtung nach Anspruch 1, dadurch gekennzeichnet, daß die zweite Schalteinrichtung (S2) von der Ansteuerschaltung des Mikrorechners (MR) nach einer zweiten Verzögerungszeit in den geöffneten Zustand geschaltet wird.

3. Einrichtung nach Anspruch 2, dadurch gekennzeichnet, daß die Umsteuerung der ersten und der zweiten Schalteinrichtung (S1, S2) jeweils im Nulldurchgang der Wechselspannung erfolgt.

4. Einrichtung nach Anspruch 3, dadurch gekennzeichnet, daß eine galvanische Trennung zwischen dem Mikrorechner (MR) und der ersten und zweiten Schalteinrichtung (S1, S2) besteht.

5. Einrichtung nach Anspruch 4, dadurch gekennzeichnet, daß die Parallelschaltung aus der ersten Schalteinrichtung (S1) und der zweiten Schalteinrichtung (S2) mit dem Vorwiderstand (VW) über eine Klemme (K) mit einer Stromüberwachungseinrichtung verbunden ist, daß die Stromüberwachungseinrichtung einen zweiten Transformator (T2) aufweist, dessen Primärwicklung zum einen mit der Klemme (K) und zum anderen mit der Wechselspannungsquelle (W) verbunden ist und daß die Sekundärwicklung des zweiten Transformators (T2) zum einen mit Masse und zum anderen mit einem Überwachungseingang des Mikrorechners (MR) verbunden ist.

6. Einrichtung nach Anspruch 5, dadurch gekennzeichnet, daß parallel zu der Sekundärwicklung des zweiten Transformators (T2) ein Arbeitswiderstand (AW) angeordnet ist.

7. Einrichtung nach Anspruch 6, dadurch gekennzeichnet, daß der Überwachungseingang des Mikrorechners (MR) über einen Tiefpaßfilter (R, C) mit dem Arbeitswiderstand (AW) verbunden ist.

8. Einrichtung nach Anspruch 7, dadurch gekennzeichnet, daß der Überwachungseingang des Mikrorechners (MR) mit der Kathode einer ersten Diode (D1), deren Anode mit Masse verbunden ist, und mit der Anode einer zweiten Diode (D2) verbunden ist, deren Kathode mit einem Spannungsregler (SR) verbunden ist.

9. Verwendung der Einrichtung nach mindestens einem der vorstehenden Ansprüche zum Betreiben von Lasten an Wechselspannungsbordnetzen von Flugzeugen.

## Claims

1. A device for operating loads from AC voltage sources, having the following features:
a) an AC voltage source (W)
b) a first transformer (T1), the primary winding of which is connected to the AC voltage source (W),
c) a load (L) which is connected to the secondary winding of the first transformer (T1),
d) a first switching device (S1) in the connection between the primary winding of the first transformer (T1) and the AC voltage source (W),
e) a microcomputer (MR), which is connected to the control input of the first switching device (S1) for reversing the first switching device (S1),
f) a series connection comprising a second switching device (S2) and a dropping resistor (VW) in parallel with the first switching device (S1), wherein the control input of the second switching device (S2) is connected to the microcomputer (MR),
g) a triggering circuit in the microcomputer (MR) for the first and second switching devices (S1, S2), which, when a switch-on signal for the load (L) is present, firstly switches the second switching device (S2) into its closed state, and after a first delay period switches the first switching device (S1) into its closed state and the second switching device (S2) into its open state.

2. A device according to claim 1, characterised in that the second switching device (S2) is switched into its open state by the triggering circuit of the microcomputer (MR) after a second delay period.

3. A device according to claim 2, characterised in that the reversal of the first and the second switching devices (S1, S2) is effected in each case at the crossover of the AC voltage.

4. A device according to claim 3, characterised in that an electrical separation exists between the microcomputer (MR) and the first and second switching devices (S1, S2).

5. A device according to claim 4, characterised in that the parallel connection of the first switching device (S1) and the second switching device (S2) is connected to the dropping resistor (VW) via a terminal (K) having a current monitoring device, that the current monitoring device comprises a second transformer (T2), the primary winding of which is connected on one side to the terminal (K) and on the other side to the AC voltage source (W), and that the secondary winding of the second transformer (T2) is connected firstly to earth and secondly to a monitoring input of the microcomputer (MR).

6. A device according to claim 5, characterised in that a load resistor (AW) is disposed in parallel with the secondary winding of the second transformer (T2).

7. A device according to claim 6, characterised in that the monitoring input of the microcomputer (MR) is connected to the load resistor (AW) via a low-pass filter (R, C).

8. A device according to claim 7, characterised in that the monitoring input of the microcomputer (MR) is connected to the cathode of a first diode (D1), the anode of which is connected to earth, and is connected to the anode of second diode (D2), the cathode of which is connected to a voltage regulator (SR).

9. Use of the device according to at least one of the preceding claims for operating loads from AC voltage airborne supply systems of aircraft.

## Revendications

1. Dispositif pour faire fonctionner des charges sur des sources de courant alternatif, possédant comme particularités:
a) une source de courant alternatif (W),
b) un premier transformateur (T1) dont l'enroulement primaire est relié à la source de courant (W),
c) une charge (L) reliée à l'enroulement secondaire du premier transformateur (T1),
d) un premier dispositif de commutation (S1) dans la liaison entre l'enroulement primaire du premier transformateur (T1) et la source de courant (W),
e) un micro-calculateur (MR) relié à l'entrée de commande du premier dispositif de commutation (S1) en vue de la commutation de celui-ci,
f) le montage en série d'un second dispositif de commutation (S2) et d'une résistance chutrice (VW) en parallèle avec le premier dispositif de commutation (S1), l'entrée de commande du second dispositif de commutation (S2) étant reliée en vue de sa commutation au micro-calculateur (MR) et
g) un circuit pilote prévu dans le micro-calculateur (MR) pour les premier et second dispositifs de commutation (S1, S2), circuit qui, en présence d'un signal d'enclenchement de la charge (L), fait d'abord passer le second dispositif de commutation (S2) à l'état fermé et fait passer ensuite avec un premier temps de retard le premier dispositif de commutation (S1) à l'état fermé et le second dispositif de commutation (S2) à l'état ouvert.

2. Dispositif selon la revendication 1, caractérisé en ce que le circuit pilote du micro-calculateur (MR) fait passer le second dispositif de commutation (S2) à l'état ouvert après un second temps de retard.

3. Dispositif selon la revendication 2, caractérisé en ce que la commutation du premier et du second dispositif de commutation (S1, S2) s'effectue chaque fois au passage par zéro de la tension alternative.

4. Dispositif selon la revendication 3, caractérisé en ce qu'une séparation galvanique est prévue entre le micro-calculateur (MR) et les premier et second dispositifs de commutation (S1, S2).

5. Dispositif selon la revendication 4, caractérisé en ce que le montage en parallèle du premier dispositif de commutation (S1) et du second dispositif de commutation (S2) avec la résistance chutrice (VW) est relié à travers une borne (K) à un dispositif de surveillance du courant, que ce dispositif de surveillance comporte un second transformateur (T2) dont l'enroulement primaire est relié d'une part à la borne (K) et d'autre part à la source de courant alternatif (W), et que l'enroulement secondaire du second transformateur (T2) est relié d'une part à la masse et d'autre part à une entrée de surveillance du micro-calculateur (MR).

6. Dispositif selon la revendication 5, caractérisé en ce qu'une résistance extérieure ou résistance de fuite (AW) est disposée en parallèle avec l'enroulement secondaire du second transformateur (T2).

7. Dispositif selon la revendication 6, caractérisé en ce que l'entrée de surveillance du micro-calculateur (MR) est reliée à la résistance de fuite (AW) à travers un filtre passe-bas (R, C).

8. Dispositif selon la revendication 7, caractérisé en ce que l'entrée de surveillance du micro-calculateur (MR) est reliée à la cathode d'une première diode (D1) dont l'anode est raccordée à la masse, ainsi qu'à l'anode d'une seconde diode (D2) dont la cathode est reliée à un régulateur de tension (SR).

9. Utilisation du dispositif selon au mons une des revendications précédentes pour faire fonctionner des charges sur des réseaux de bord à courant alternatif d'avions.
